Europäisches Patentamt

European Patent Office

Office européen des brevets

(11) Publication number : **0 467 863 A1**

# (12) EUROPEAN PATENT APPLICATION

(21) Application number : **91830311.6**

(22) Date of filing : **12.07.91**

(51) Int. Cl.⁵ : **E01B 9/68**

(30) Priority : **19.07.90 IT 2098690**

(43) Date of publication of application :
**22.01.92 Bulletin 92/04**

(84) Designated Contracting States :
**AT BE DE ES FR GB NL SE**

(71) Applicant : **FIP INDUSTRIALE S.P.A.**
**Via Scapacchiò, 41**
**I-35030 Selvazzano Dentro (Padova) (IT)**

(72) Inventor : **Vendramini, Corrado, FIP**
**INDUSTRIALE S.p.A.**
**Via Scapacchiò, 41**
**I-35030 Selvazzano Dentro (Padova) (IT)**
Inventor : **Pompei, Michel, FIP INDUSTRIALE**
**S.p.A.**
**Via Scapacchiò, 41**
**I-35030 Selvazzano Dentro (Padova) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Anti-vibration resilient insulation for railroad tracks.**

(57) The present invention relates to an anti-vibration resilient insulation for railroad tracks comprising an elastomeric material layer having a plurality of cavities which, through the thickness of the layer, provide different thickness regions, in order to provide the material with low stiffness values.

*Fig. 1*

EP 0 467 863 A1

Jouve, 18, rue Saint-Denis, 75001 PARIS

The present invention relates to an anti-vibration resilient insulation material for railroad tracks.

As is known, trains moving on a railroad track generate great vibrations which must be properly insulated or dampened.

In fact, a moving train generates a lot of noise or vibrations which are propagated through the soil to adjoining buildings and the like: these vibrations, in particular, originate in turn great stesses on adjacent buildings and, moreover, provide a great "acoustic" pollution.

## SUMMARY OF THE INVENTION

Accordingly, the aim of the present invention is to overcome the above mentioned problem by providing an anti-vibration resilient insulation for railroad tracks which is very effective in dampening the vibrations transmitted by the railroad track as a train moves thereon, and is specifically designed for dampening vibrations within a frequency range from 20 to 150 Hz.

Within the scope of the above mentioned aim, a main object of the present invention is to provide such an anti-vibration insulation which is adapted to dampen the strongest vibrations, that is those vibrations which have a frequency near the characteristic frequency of the un-sprung masses of the train.

Yet another object of the present invention is to provide such an anti-vibration resilient insulation material which can be easily and quickly applied on the railroad track beds without substantially modifying the latter and which, moreover, can be easily made starting from easily available elements and materials.

Yet another object of the present invention is to provide such an insulation material which is very competitive from a mere economic stantpoint.

According to one aspect of the present invention, the above mentioned aim and objects, as well as yet other objects, which will become more apparent hereinafter, are achieved by an anti-vibration resilient insulation material for railroad tracks, characterized in that said material comprises an elastomeric material layer including a plurality of cavities forming, through the thickness of said layer, different thickness regions to provide small stiffness values.

## BRIEF DESCRIPTION OF THE DRAWINGS

Further characteristics and advantages of the invention will become more apparent from the following detailed disclosure of a preferred, though not esclusive, embodiment thereof, which is illustrated, by way of an indicativa but not limitative example, in the figures of the accompanying drawings, where:

Figure 1 is a schematic view showing a resilient insulation material according to the invention being provided with closed cross-section cavities;

Figure 2 illustrates a resilient insulation material according to the invention which is provided with open cross-section cavities;

Figure 3 is a cross-sectional view of a railroad track bed, in which there is clearly represented the arrangement of the resilient insulation material; and

Figure 4 is a schematic view showing another embodiment of a resilient insulation material according to the invention.

## DESCRIPTION OF THE PREFERRED EMBODIMENTS

With reference to the figures of the accompanying drawings, the anti-vibration resilient insulation material for railroad tracks according to the invention comprises an elastomeric material layer which has a cushion or carpet shape, and being generally indicated at the reference number 1.

In this connection it should be pointed out that for the intended application it would not be possible to use a compact rubber material, because of the low compressibility of the latter.

In order to achieve the desired performance, the main feature of the invention is that, even if a low elasticity module material is not used, there is obtained a small stiffness value by designing a particular geometrical arrangement of the cushion or carpet cross-section.

More specifically, the mentioned cross-section is provided with a plurality of suitably arranged cavities.

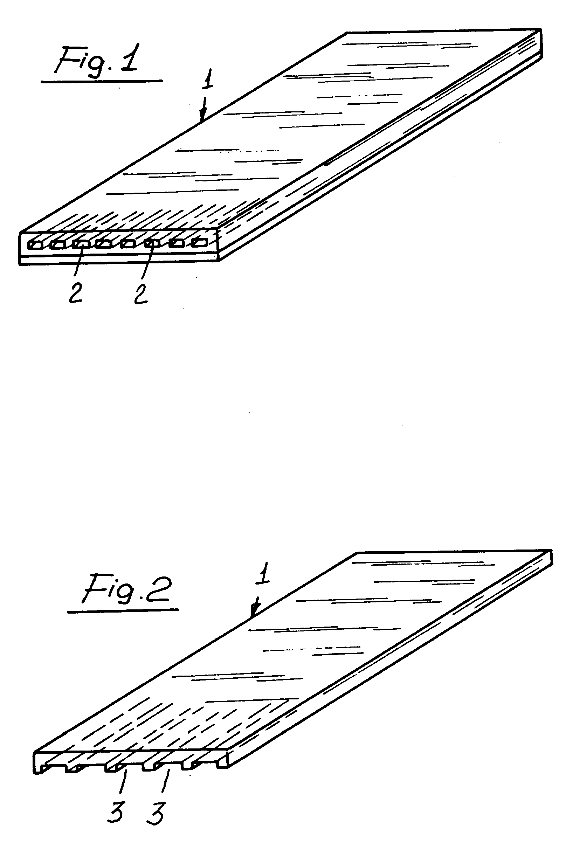

These cavities, which are indicated at the reference number 2 in figure 1, and respectively at the reference number 3 in figure 2, can have a closed cross-section or an open cross-section, and the size and arrangement of these cavities must be so designed as to provide the desired stiffness characteristics.

From experimental tests the Applicant has found that it is necessary to hold a small ratio between the pressed surface and the free surface of the subject material, and that this ratio must have a value less than 1, in order to prevent the so-called confinement effect from occurring.

In particular, the above mentioned cavities can extend in any directions.

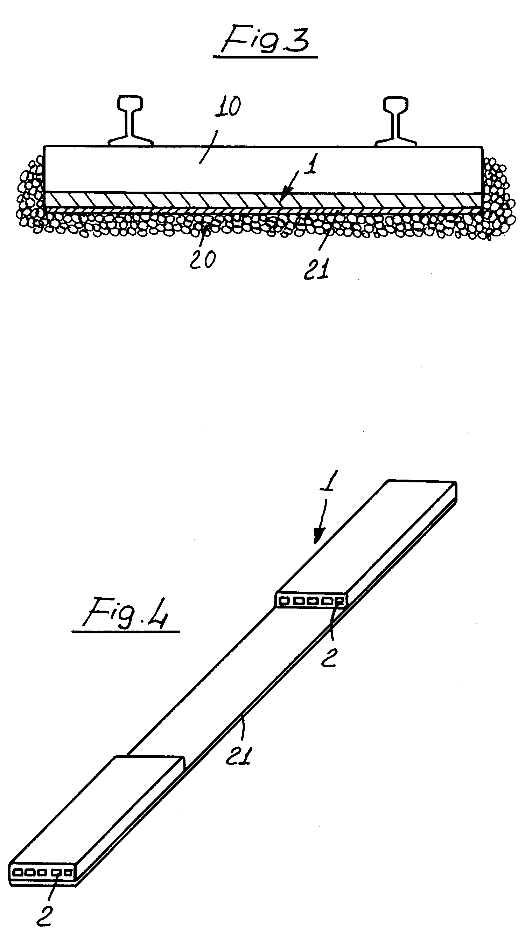

If the cushion material 1 is to be applied under a sleeper 10, then it will be arranged as shown in figure 3 and will extend substantially for the overall length of the sleeper.

Moreover, as is clearly shown in figure 4, the cushion material can be made in several lengths to be arranged one adjoining the other.

If the cushion material must be installed on the ballast 20, then between this cushion material and ballast 20 an anti-perforating layer will be arranged, indicated at the reference number 21, adapted to prevent the cushion material from directly contacting the ballast; this protecting layer, in particular, can also comprise a steel sheet element 22 suitably associated with the cushion material, for example by curing or by any suitable glue material, and being in turn coated by a rubber layer 23 on the portion thereof contacting the ballast and operating as an anti-slipping and wear protecting coating.>

This protecting layer can also comprise an elastomeric material sheet, having any suitable hardness, or other elements such as fabrics, nets and the like.

With the disclosed arrangement, accordingly, without affecting the characteristics of the used material, it is possible to provide a desired stiffness value by simply adjusting the cross-section geometric configuration, by providing cavities, of any desired shape, which will allow a good insulation of the vibrations and, in particular, of the vibrations related to the unsprung masses of the train.

The invention, as disclosed, is suceptible to several modifications and variations all of which will come within the spirit and scope of the appended claims. Moreover, all of the details can be replaced by other technically equivalent elements.

In practicing the invention, the used materails, as well as the contingent size and shape can be any, according to requirements.

## Claims

1. An anti-vibration resilient insulation material for railboard tracks, characterized in that said material comprises an elastomeric material layer including a plurality of cavities forming, through the thickness of said layer, different thickness regions to provide small stiffness values.

2. A resilient insulation material according to Claim 1, characterized in that said cavities have a closed cross-section.

3. A resilient insulation material according to claims 1 and 2, characterized in that said cavities have an open cross-section.

4. A resilient insulation material according to one or more of the preceding claims, characterzed in that the ratio between the pressed surface and the free surface of said layer is less than 1.

5. A resilient insulation material according to one or more of the preceding claims, characterized in that said material further comprises a protectinf layer arranged between said elastomeric material layer and a ballast material.

6. A resilient insulation material according to one or more of the preceding claims, characterized in that said protecting layer is arranged on at least a surface of said elastomeric material layer.

7. A resilient insulation material according to one or more of the preceding claims, characterized in that said protecting layer comprises a steel metal sheet element which is coupled to said resilient material by curing or by a glue material, said sheet element being in turn coated by a rubber layer, on the portion thereof contacting said ballast.

8. A resilient insulation material according to Claim 7, characterized in that said protecting layer comprises an elastomeric material sheet.

_Fig.1_

1

2   2

_Fig.2_

1

3   3

_Fig 3_

_Fig.4_

**European Patent Office**

# EUROPEAN SEARCH REPORT

Application Number

EP    91 83 0311

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 008 743 (EISSES) | 1-6 | E01B9/68 |
| A | * page 4, line 12 - page 6, line 11; figures 1-5 * | 8 | |
| | | | |
| Y | DE-A-3 022 322 (METZELER) | 1-6 | |
| | * page 2, line 2 - line 25 * | | |
| | * page 5, line 4 - page 7, line 10; figures 1,2 * | | |

**TECHNICAL FIELDS SEARCHED (Int. Cl.5 )**

E01B

The present search report has been drawn up for all claims

| Place of search | Date of completion of the search | Examiner |
|---|---|---|
| THE HAGUE | 14 OCTOBER 1991 | TELLEFSEN J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)